# EUROPEAN PATENT SPECIFICATION

(11) **EP 1 083 996 B1**
(45) Date of publication and mention of the grant of the patent: **30.07.2003**
(21) Application number: 99921698.9
(22) Date of filing: 05.05.1999
(51) Int. Cl.: B05B 7/32

(54) **FORAGE ADDITIVE APPLICATION SYSTEM AND METHOD**
VORRICHTUNG UND VERFAHREN ZUR ZUGABE VON ADDITIVEN ZU FUTTERMITTELN
SYSTEME ET PROCEDE D'APPLICATION D'UN ADDITIF POUR FOURRAGE

(30) Priority: 08.05.1998 US 75110
(43) Date of publication of application: 21.03.2001
(73) Proprietor: Pioneer Hi-Bred International, Inc., Johnston, Iowa 50131-1000 (US)
(72) Inventor: OEPPING, James, M., Johnston, IA 50131-1000 (US); ROBERTS, Jeffrey, Johnston, IA 50131-1000 (US)
(74) Representative: Thomson, Paul Anthony
(86) International application number: US9909854
(87) International publication number: WO99058253

(56) References cited:
- WO-A-92/11759
- DE-A- 2 024 927
- US-A- 4 714 196
- US-A- 5 310 113

## Description

### BACKGROUND OF THE INVENTION

### Field Of The Invention

The present invention relates to the application of forage additives. More particularly, though not exclusively, the present invention relates to a method and apparatus for applying forage additives in order to enhance silage and stored crop preservation according to the preamble of claim 1 or 20, respectively.

### Problems In The Art

Forage additives are used to enhance silage and stored crop preservation. For example, when silage is created by driving a chopper through a field, the harvested silage is often sprayed with inoculants as the silage is being harvested. A typical silage inoculant includes one or more strains of microorganisms, enzymes, bacteria, yeast, and/or other chemicals. One problem with the inoculant is that if the inoculant is placed in a large holding tank as is usually the case, all of the inoculant must be used in a specified period of time or else the inoculant is no longer usable. As a result, any left over inoculant is usually discarded or wasted.

In one example, an additive is comprised of a water soluble crop inoculant which may be applied at an application rate of 0.1-10 grams per ton of silage. This type of inoculant is mixed with water at ratios between 1:200 to 1:3000. The mixture is sprayed on the crop as it are being harvested by harvesting equipment. Once mixed with water, the inoculant must be used within a specified period of time.

The chemical injection of agricultural chemicals involves two basic injection methods, high pressure pump injection and differential pressure injection. High pressure pump injection is a more common method to accomplish the ratio and flow rates desired.

U.S. Patent 4,714,196 to McEachern et al. discloses a farm chemical delivery system with two fixed liquid tanks for holding a carrier fluid and a farm chemical respectively. Pumps are used to extract and move the carrier fluid and farm chemical to a spray boom. German Patent 2024927 discloses an agricultural implement with a pump, a fluid tank, and another container, where the pump pulls fluid from both containers and sends the mixture to a sprayer.

### Features Of The Invention

A general feature of the present invention is the provision of a method and apparatus for applying forage additives according to claim 1 or 20, respectively, which overcomes problems found in the prior art.

A further feature of the present invention is the provision of a method and apparatus for applying forage additives wherein the additive is contained in a small separate tank which is inline injected into a water stream.

Further features, objects, and advantages of the present invention include:
A method and apparatus for applying forage additives which allows the additive to be stored overnight or for a longer period of time.
A method and apparatus for applying forage additives which uses a display unit to display the total amount of the crop which has been sprayed with the forage additive.
A method and apparatus for applying forage additives with a high degree of accuracy.
A method and apparatus for applying forage additives which permits the refrigeration of the additive if not used within a certain time.

These as well as other features, objects and advantages of the present invention will become apparent from the following specification and claims.

### SUMMARY OF THE INVENTION

The forage additive application system of the present invention is used to apply forage additives onto silage, hay, high moisture corn, and other agricultural crops. The invention is comprised of a water source and at least one spray nozzle connected together with a fluid conduit. The water is pumped through the conduit and the spray nozzle while the concentrated forage additive is injected into the conduit at rate related to the desired application rate of the additive.

### BRIEF DESCRIPTION OF THE DRAWINGS

Figure 1 is a view of a silage chopper with a forage additive application system of the present invention.
Figure 2 is a schematic diagram of the forage additive application system of the present invention.
Figures 3-5 show the container and the acceptor used with the present invention.
Figure 6 is a view of a controller used with the present invention.
Figure 7 is a view of an injection pump used with the present invention.

### DETAILED DESCRIPTION OF THE PREFERRED EMBODIMENT

The present invention will be described as it applies to its preferred embodiment. It is not intended that the present invention be limited to the described embodiment. It is intended that the invention cover all alternatives, modifications, and equivalencies which may be included within the spirit and scope of the invention.

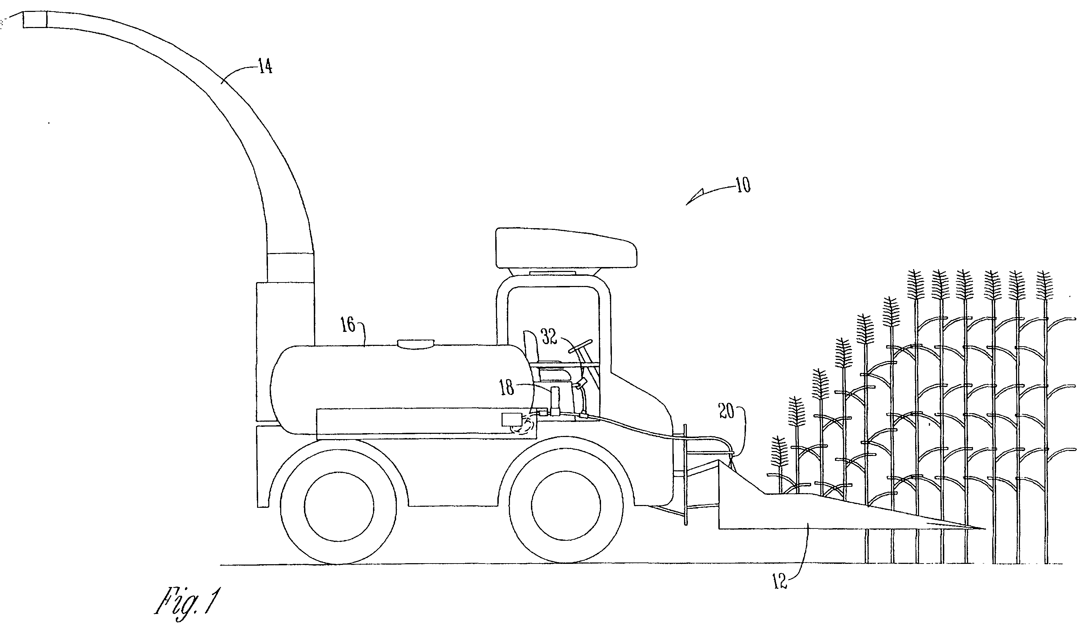

Figure 1 shows a self propelled silage chopper 10 including a cutter 12 and a discharge chute 14. While Figure 1 shows a chopper, and the description describes a chopper, it is understood that the present invention could be used with other harvesting and handling equipment such as bailers, combines, roller mills, blowers, etc. Also, the invention could be used to apply forage additives on various crops, including, but not limited to silage, hay, high moisture corn, and other agricultural crops. The types of chemicals sprayed by the present invention is also not limited to forage additives. For example, the invention could be used to spray other chemicals including herbicides, insecticides, fertilizers, etc. In addition, the invention could be used to spray inoculants with other additives. The present invention could also be used in other applications as well.

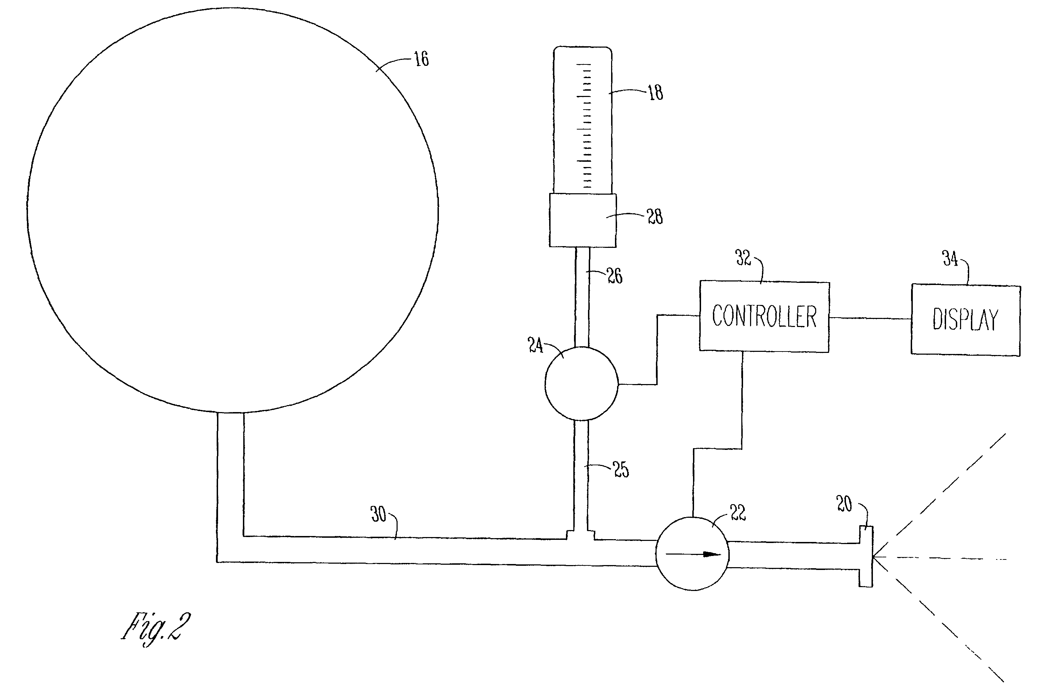

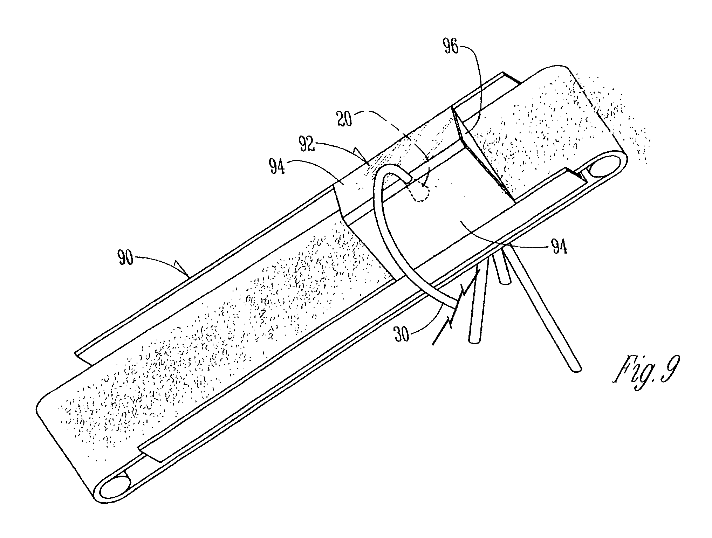

The chopper 10 includes a water tank 16 as well as a smaller forage additive container 18. The tank 16 and container 18 are both operatively connected to a spray nozzle 20 for applying a mixture of water and forage additives onto the silage harvested by the chopper 10. While Figure 2 shows only one container 18, more containers 18 could be used simultaneously (see Figure 8, for example). Similarly, a plurality of spray nozzles could also be used.

Figure 2 is a schematic diagram of the forage additive application system of the present invention. The system shown if Figure 2 could be used in combination with various harvesting and handling equipment as mentioned above. Figure 2 shows the water tank 16, the forage additive container 18, and the nozzle 20 described above. Figure 2 also shows a main pump 22 as well as an injection pump 24. The injection pump 24 is in communication with the container 18 via a line 26 and a custom vessel acceptor 28 (described below). Alternately, the injection pump 24 and the vessel acceptor 28 could be formed as a single unit rather than as separate units. The injection pump 24 is also in communication with the main pump 22 via the line 25 as well as with the main water tank 16 via the line 30. The main pump 22 is also in communication with the nozzle 20. When the main pump 22 is activated, water from the water tank 16 is pumped through the nozzle 20 and onto the harvested silage (Figure 1). The main pump 22 will primarily pump water from the main water tank 16, but will also pump the appropriate amount of forage additives depending on the operation of the injection pump 24 (described below). Therefore, by controlling the main pump 22 and the injection pump 24, the user can precisely control the mixture of water and forage additives which are sprayed through the nozzle 20.

Figure 2 also shows a controller 32 and a display unit 34 which are operatively connected to the injection pump 24 and the main pump 22. Preferably, the controller 32 and display 34 are located within the cab of the chopper 10 allowing the user to control the forage additive application system. The controller 32 and display 34 are described in more detail below.

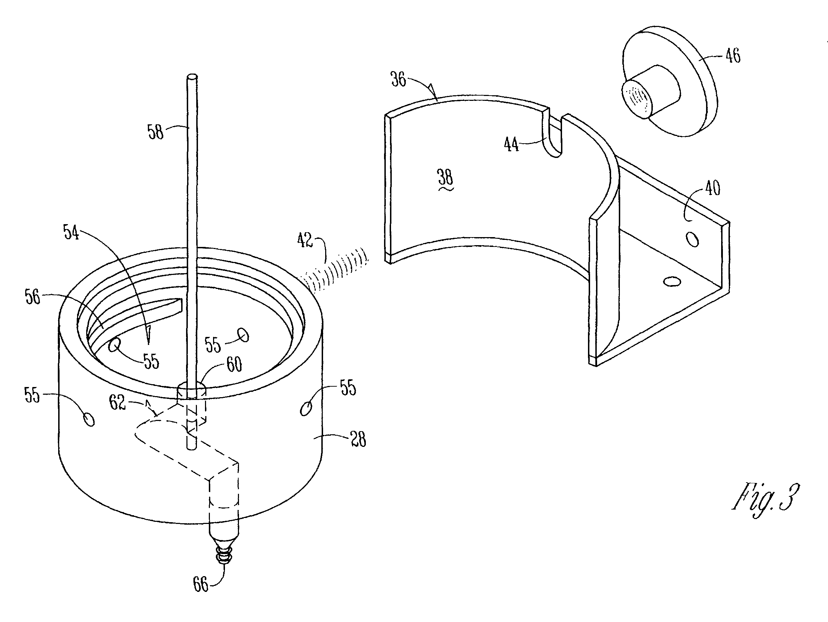

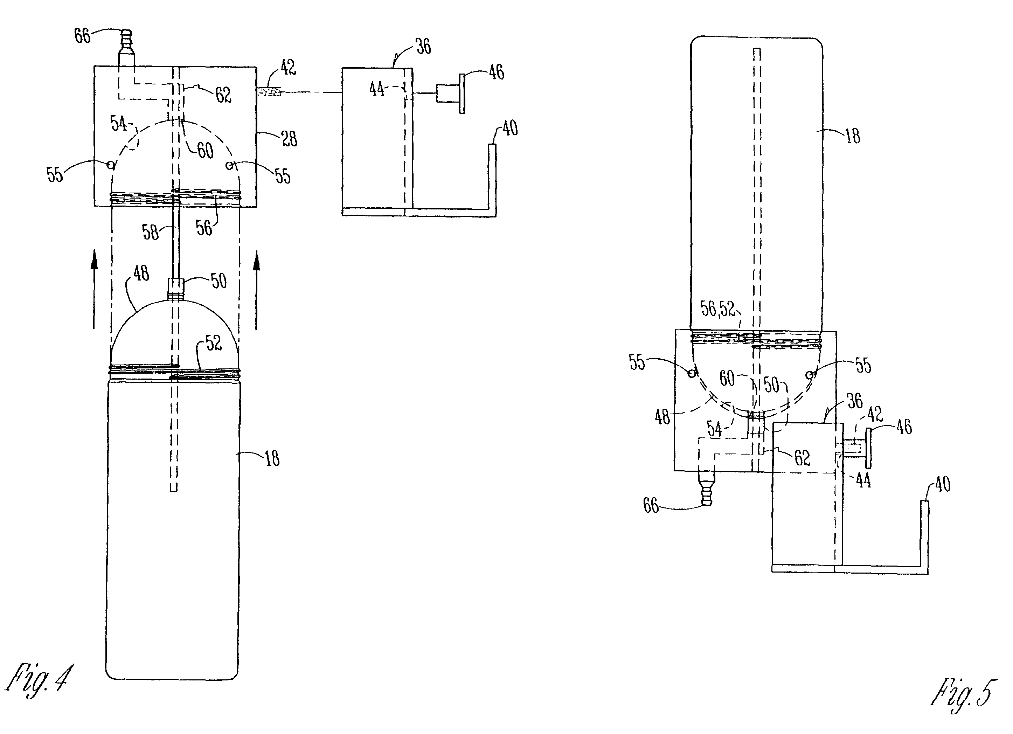

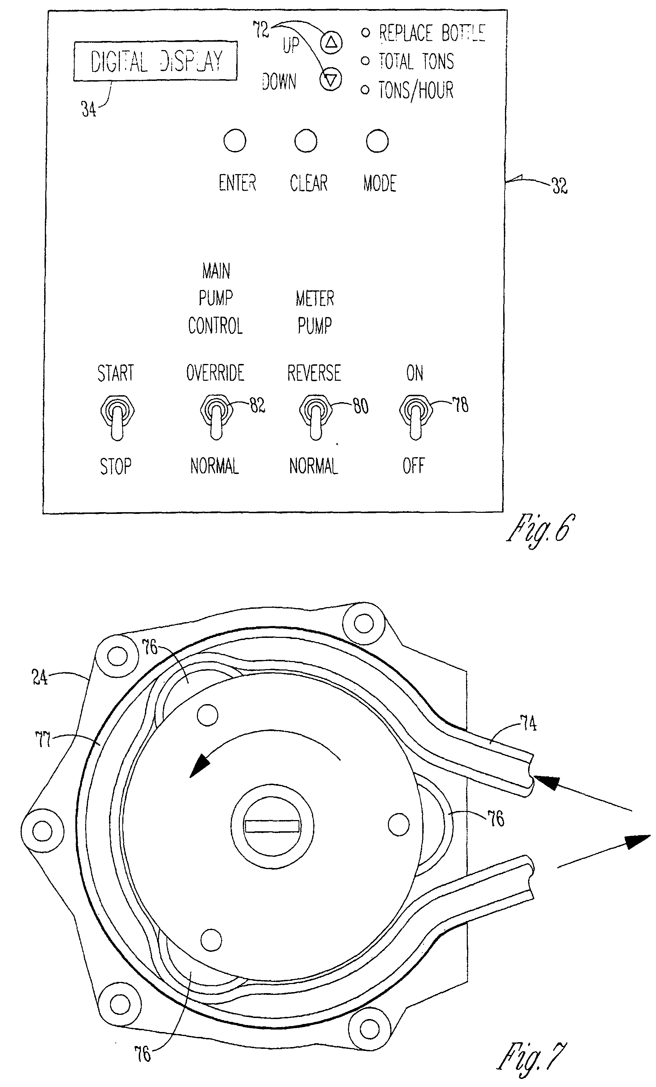

Figure 3 is an exploded view of the vessel acceptor 28. Figures 4 and 5 show views of the vessel acceptor 28 in combination with the container 18. A steel bracket 36 includes a curved surface 38 which matches the curved surface of the acceptor 28. The bracket 36 also includes a mounting plate 40 which can be bolted to the chopper 10 to hold the bracket 36 in place. A threaded stud 42 extends from the vessel acceptor 28 and can be placed within the groove 44 formed in the curved surface 38 of the bracket 36. The vessel acceptor 28 can be placed within the curved surface 38 of the bracket 36 with the threaded stud 42 placed within the groove 44 and secured in place by a threaded set knob 46. As a result, the vessel acceptor 28 can be releasably secured to the bracket 36 in two different orientations (described below).

As shown in Figure 4, the container 18 is adapted to be inserted within the vessel acceptor 28. The container 18 is preferably comprised of a blow molded plastic container having a generally cylindrical bottom portion and a dome-shaped upper portion 48. Formed on the upper portion 48 is an opening 50 which may be fitted with a cap (not shown) prior to use. The container 18 also includes a number of threads 52 formed below the upper portion 48. The vessel acceptor 28 includes a cavity 54 which is shaped to receive the upper portion 48 of the container 18. A number of ventilation holes 55 are formed in the cavity 54 to prevent the use of improper containers. The vessel acceptor 28 also includes a set of threads 56 which can be threaded onto the threads 52 of the container 18. When the container 18 is screwed into the vessel acceptor 28, an air vent tube 58 is inserted through the opening 50 and the opening 50 engages a lip seal 60 so that the inside of the container 18 will be in communication with a series of channels 62 formed within the vessel acceptor 28. The air vent tube 58 lets air into the container 18 as the contents of the container 18 are pumped out.

As shown best in Figure 3, port 66 connects to the line 26 shown in Figure 2. The container 18 and vessel acceptor 28 are used in the following manner. In the preferred embodiment, the user will purchase a container 18 having a quantity of forage additive in a powder form. Before the forage additive can be used, it must be converted to a liquid form. To accomplish this, the user fills the container 18 half full with water and shakes the container vigorously. The container 18 is then filled to a "fill to here" line on the container. Then, the contents are shaken again to assure a good mix. The user will then attach the container 18 to the acceptor 28 as shown in Figure 4. At this point, the container 18 contains a forage additive concentrate. Once the mixture is mixed satisfactorily, the container 18 and vessel acceptor 28 are inverted 180° and mounted to the bracket 36 as shown in Figure 5.

Figure 6 shows a view of a controller 32 and display 34 which is mounted within the cab of the chopper 10. The controller 32 and display 34 may be separate (Figure 2) or may be housed in the same unit (Figure 6). The controller 32 includes a number of push buttons and toggle switches which are used to control the various operational modes of the present invention. The controller 32 includes a pair of up/down buttons 72 which the user can use to select a rate for applying forage additive in tons per hour, for example. The controller 32 also includes a main pump control override switch 82 which may be used to bypass the controller 32 and run the main pump at the highest possible rate. The display 34 is capable of displaying various information including the number of tons of forage which have been treated (based on the amount of forage additive that the pump 24 has pumped), the rate (in tons/hour), etc. The controller 32 has several LEDs which provide indications such as when the container 18 is low (based on the pump 24 operation), what is being displayed on the display 34, etc.

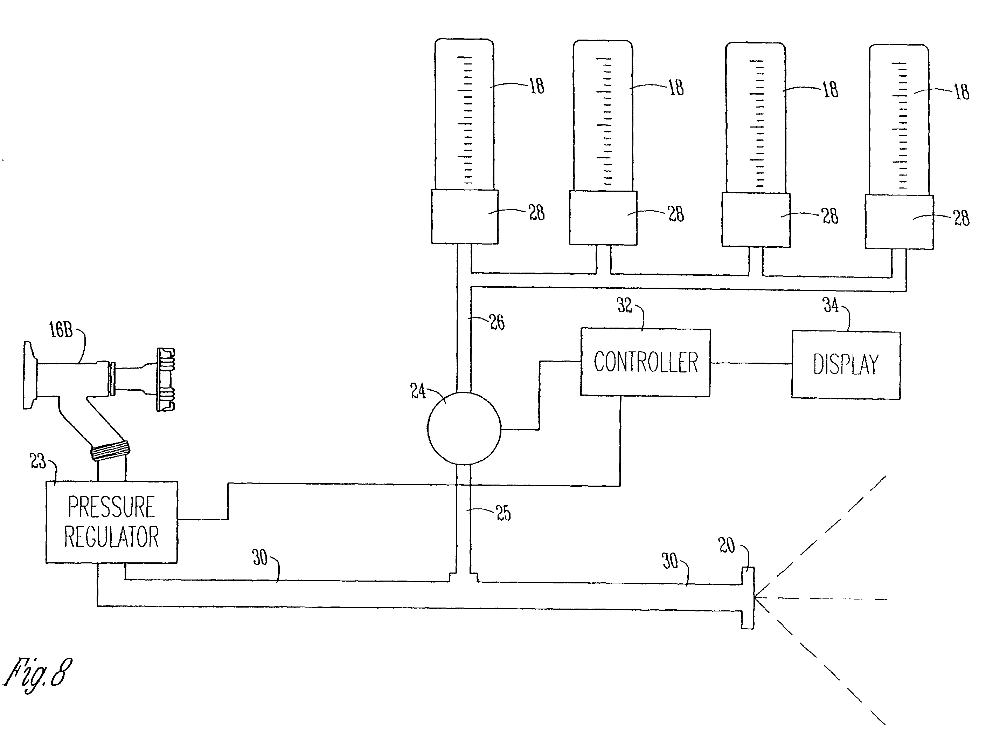

The injection pump 24 is capable of precisely controlling the amount of forage additive injected into the water line 30. To precisely control the injection of the forage additive, a peristaltic pump is used. Figure 7 is a sectional view of the injection pump 24. The injection pump 24 itself is an off-the-shelf item and is not the subject of the present invention.

A peristaltic pump works in the following manner. A length of resilient tubing 74 extends within the pump in a circle as shown. A series of three rollers 76 are positioned 120° apart as shown. As the rollers 76 are rotated, they press opposite sides of the tubing 74 together as shown. This creates a precise volume 77 of trapped liquid between two adjacent rollers 76. As the rollers 76 rotate counterclockwise, this precise volume 77 between adjacent rollers 76 is expelled from the pump 24. A series of these precise volumes 77 of liquid are expelled at a rate of three times per revolution. Therefore, by precisely controlling the rotation of the roller 76, the amount of forage additive pumped through the pump 24 can be precisely controlled. The flow through the pump 24 can also be reversed by rotating the roller 76 clockwise. One suitable peristaltic pump is the model 900-0627 manufactured by Barnant Company.

The present invention operates as follows. As mentioned above, the user will purchase a container 18 of forage additive in powder form. The user first fills the container 18 half full with water and shakes the container 18 vigorously. The user then fills the container 18 to the "fill to here" line. Then, the contents are shaken again to assure a good mix. The user then attaches the container 18 to the acceptor 28 and inverts the container 18 and vessel acceptor 28 and mounts them to the bracket 36 (Figure 5). The controller 32 shown in Figure 6 includes an on/off switch 78. With the power turned on, the user may select an application rate by pressing the up/down buttons 72. When the user starts operating the chopper 10, the main pump 22 and injection pump 24 are activated. As the main pump 22 pumps water from the tank 16 through the nozzle 20, the injection pump 24 will inject a precise amount of forage additive into the line 30. In this way, a precise amount of forage additive will be sprayed on the silage through the nozzle 20.

When the user is finished harvesting silage, the unused forage additive disposed within the lines between the line 30 and the container 18 can be pumped back into the container 18. The controller 32 includes a backflush switch 80 which reverses the rotation of the rollers 76 within the pump 24 shown in Figure 7. When the pump 24 is reversed, the forage additive within the tubing 74 and the lines extending from the pump 24 flow backwards and back into the container 18. Since the forage additive is a different color than the water, the user will know when to stop the backflush of forage additive in order to prevent water from the tank 16 to be drawn into the container 18. Because of the backflush process, the forage additive which pumped out of the container 18, but not sprayed on the silage, will not be wasted. After the backflush process, the container 18 can be removed and refrigerated for later use.

Figures 8 and 9 show an alternate embodiment of the present invention. When high moisture corn is harvested, it is often sprayed with inoculants to enhance the preservation of the corn. Figure 8 is a schematic diagram of an inoculant application system similar to the system shown in Figure 2, although the system will not be installed on harvesting equipment. Figure 8 shows a water source 16B (a hydrant), four inoculant containers 18, and a nozzle 20. Four inoculant containers are used to accommodate the high volume of corn that will be inoculated. The system can accommodate any number of containers. Since a water source 16B is used, the main pump 22 is not necessary. However, a pressure regulator 23 is used to maintain a desired pressure, and therefore, a desired spray rate. The injection pump 24, controller 32, and display 34 are the same as those described above.

The inoculant is applied to the high moisture corn as the corn is elevated into a corn bin. Figure 9 shows a belt conveyor 90 being used to convey corn into a bin or bunker (not shown). While Figure 9 shows a belt conveyor, other conveying devices could be used such as augers, etc. Because of potential high wind conditions present on the belt conveyor 90, a shroud 92 is used to house the spray nozzle 20 to prevent wind from blowing the inoculant away before is can be applied to the corn. The shroud is comprised of two opposing panes of Plexiglas 94 disposed at angles and two opposing ends 96 comprised of sheet metal. The shroud allows the inoculant to be sprayed on the corn without being effected by the wind.

The preferred embodiment of the present invention has been set forth in the drawings and specification, and although specific terms are employed, these are used in a generic or descriptive sense only and are not used for purposes of limitation.

## Claims

1. An apparatus (10) for spraying a material on agricultural crops comprising: a water source (16, 16B) for delivering a relatively large amount of water; a spray nozzle (20); a conduit (30) connected between the water source (16, 16B) and the spray nozzle (20) for communicating water from the water source (16, 16B) to the spray nozzle (20); a first source of water pressure (22, 16B) in communication with the conduit (30) for delivering water from the water source (16, 16B) to the spray nozzle (20); and an injection pump (24) controllable independently from the source of water pressure (22,16B) and in communication with the container (18) for injecting material from the container (18) into the conduit (30) **characterized by** a removable, hand-sized container (18) holding a concentrated material in an amount significantly less than the water available from the water source and being separable from any delivery mechanism, and a container acceptor (28) adapted to sealingly receive and removably mount the container (18).

2. The apparatus of claim 1 **characterized by** the injection pump (24) being located upstream from a first pump (22).

3. The apparatus of claim 1 **characterized by** a controller (32) for controlling the operation of the injection pump (24), wherein the controller (32) causes the material to be injected at a rate related to a desired application rate.

4. The apparatus of claim 3 **characterized by** a user interface (72) allowing the desired additive application rate being entered into the controller (32) by a user.

5. The apparatus of claim 1 **characterized by** the injection pump (24) being comprised of a peristaltic pump.

6. The apparatus of claim 1 **characterized by** the injection pump (24) being comprised of a reversible pump.

7. The apparatus of claim 1 further comprising a container acceptor (28) for holding the container (18), the container acceptor (28) further comprising a port (66) being in communication with the injection pump (24).

8. The apparatus of claim 7 **characterized by** a bracket (36) adapted to receive and support the container acceptor (28) to hold the container (18) in either an upright or an inverted position.

9. The apparatus of claim 7 further comprising a bracket (36) for securing the container acceptor (28) to a support structure in either an upright or an inverted position.

10. The apparatus of claim 1 wherein the apparatus is used on harvest equipment.

11. The apparatus of claim 10 **characterized by** the harvest equipment being comprised of a chopper (10).

12. The apparatus of claim 11 wherein container (18) holds forage additive and the apparatus is used to spray forage additives on silage while harvesting the silage using the chopper.

13. The apparatus of claim 10 **characterized by** the harvest equipment 10 being comprised of a bailer.

14. The apparatus of claim 13 wherein the container (18) includes an additive and the apparatus is used to spray additives on hay while bailing the hay using the bailer.

15. The apparatus of claim 10 **characterized by** the harvest equipment being comprised of a combine.

16. The apparatus of claim 1 wherein the water source (16, 16B) is comprised of a water tank (16).

17. The apparatus of claim 1, wherein container (18) includes spray forage additive and the apparatus is used to spray forage additives on high moisture corn as the high moisture corn is being moved by a conveying device (90), the apparatus further comprising a shroud (94) disposed above the conveying device (90) for blocking wind, the spray nozzle (20) being disposed at least partially within the shroud (94).

18. The apparatus of claim 1 further comprising a display unit (34) for displaying information relating to the apparatus.

19. The apparatus of claim 18 **characterized by** the display unit (24) including information relating to the amount of agricultural crop that has been sprayed with additives.

20. A method of treating silage, hay, high moisture corn, or other agricultural crops using source (16, 16B) of water and a conduit (30) between the source (16, 16B) of water and a spray nozzle (20) by delivering water from the source of water (16, 16B); independently controlling and injecting additive from a container (18) into the water in the conduit (30) at a rate related to the desired application rate of the additive to form a mixture of water and additive in the conduit; pumping the mixture through the spray nozzle (20) onto the crop so as to treat the silage, hay, high moisture corn, or other agricultural crops with additives the method **characterized by** removably mounting a hand-sized container (18) of concentrated additive in an amount significantly less than the amount of water available from the source of water (16, 16B).

21. The method of claim 20 **characterized by** the additive being injected into the conduit (30) using an injection pump (24) connected between the container (18) and the conduit (30).

22. The method of claim 21 **characterized by** the step of reversing the injection pump (24) to draw additives back into the container (18).

23. The method of claim 20 **characterized by** the steps of: providing a container acceptor (28); connecting the container (18) to the container acceptor (28); and providing a fluid connection between the container acceptor (28) and the conduit (30).

24. The method of claim 20 **characterized by** the step of placing the contents of the container (18) in communication with the fluid connection to allow the contents of the container (18) to be injected into the conduit (30).

25. The method of claim 20, wherein the silage, hay, high moisture corn, or other agricultural corps are treated with additives while harvesting the crops using harvesting equipment.

26. The method of claim 20 **characterized by** the step of displaying information relating the application of forage additives.

27. The method of claim 20 **characterized by** the step of displaying information relating to the amount of the agricultural crop that has been treated.

28. The method of claim 20, **characterized by** the method being used to spray additive on high moisture corn, the method further comprising the steps of: conveying the high moisture corn with a conveying system (90); blocking any wind with a shroud (92) disposed above the conveying system (90); and positioning the spray nozzle (20) at least partially within the shroud (92) to spray additives onto the high moisture corn as it passes below the shroud (92).

29. The apparatus of claim 1 **characterized by** the liquid being a forage additive.

30. The apparatus of claim 29 **characterized by** the forage additive being comprised of an inoculant.

## Patentansprüche

1. Eine Vorrichtung 10 zum Versprühen eines Materials auf landwirtschaftliche Kulturpflanzen mit:
- einer Wasserquelle (16,16b), welche eine relativ große Menge an Wasser liefert;
- eine Sprühdüse (20);
- eine Leitung (30), welche zwischen der Wasserquelle (16, 16b) und der Sprühdüse (20) angeschlossen ist, um Wasser von der Wasserquelle (16, 16b) zu der Sprühdüse (20) zu transportieren;
- eine erste Wasserdruckquelle (22, 16b), welche in Verbindung mit der Leitung (30) für die Bereitstellung von Wasser aus der Wasserquelle (16, 16b) zu der Sprühdüse (20) liefert; und
- eine Injektionspumpe (24), welche unabhängig von dem Druck der Wasserquelle (22, 16b) gesteuert werden kann und in Verbindung mit dem Behälter (18) für das Injektionsmaterial aus dem Container (18) in die Leitung (30) steht;
**dadurch gekennzeichnet,**
**dass** ein entfernbarer, handgroßer Behälter (18), welcher ein konzentriertes Material in einer Menge, die signifikant kleiner ist als das verfügbare Wasser aus der Wasserquelle aufweist, und welche abtrennbar von einem Zuführungsmechanismus ist, und eine Behälteraufnahme (28), welche so angeordnet ist, um den Container (18) dicht aufzunehmen und entfernbar zu befestigen.

2. Die Vorrichtung gemäß Anspruch 1 **dadurch gekennzeichnet, dass** die Injektionspumpe (24) flüssaufwärts einer ersten Pumpe (22) angeordnet ist.

3. Die Vorrichtung gemäß Anspruch 1 **dadurch gekennzeichnet, dass** eine Steuerung (32) die Funktion der Injektionspumpe (24) steuert, wobei die Steuerung (32) dazu führt, dass das Material in einer Menge, in Abhängigkeit von der gewünschten Auftragsmenge, injiziert wird.

4. Die Vorrichtung gemäß Anspruch 3 mit einem Bedienerfeld (72), welches es dem Bediener erlaubt, die gewünschte Auftragsmenge des Zusatzes in die Steuerung (32) einzugeben.

5. Die Vorrichtung gemäß Anspruch 1, **dadurch gekennzeichnet, dass** die Injektionspumpe (24) eine Peristaltikpumpe ist.

6. Die Vorrichtung gemäß Anspruch 1 mit der Injektionspumpe (24) eine reversible Pumpe ist.

7. Die Vorrichtung gemäß Anspruch 1 ferner mit einer Behälteraufnahme (28), um den Behälter (18) festzuhalten, wobei die Behälteraufnahme (28) ferner eine Öffnung (66) aufweist, welche in Verbindung mit der Injektionspumpe (24) steht.

8. Die Vorrichtung gemäß Anspruch 7 mit einem Halter (36), welcher so angeordnet ist, um die Behälteraufnahme (28) welche den Behälter (18) entweder in einer aufrechten oder einer umgedrehten Position hält, aufzunehmen und zu stützen.

9. Die Vorrichtung gemäß Anspruch 7 ferner mit einem Halter (36), um die Behälteraufnahme (28) mit einer Stützstruktur in entweder einer aufrechten oder einer umgedrehten Position zu sichern.

10. Die Vorrichtung gemäß Anspruch 1, wobei die Vorrichtung in einer Erntemaschine verwendet wird.

11. Die Vorrichtung gemäß Anspruch 10 **dadurch gekennzeichnet, dass** die Erntemaschine einen Häcksler (10) ist.

12. Die Vorrichtung gemäß Anspruch 11, wobei der Behälter (18) Futtermittelzusätze beinhaltet, und die Vorrichtung dazu verwendet wird, um Futterzusätze auf Silage zu sprühen, während die Silage unter Verwendung des Häckslers geerntet wird.

13. Die Vorrichtung gemäß Anspruch 10 **dadurch gekennzeichnet, dass** die Erntemaschine (10) eine Ballenpresse ist.

14. Die Vorrichtung gemäß Anspruch 13, wobei der Behälter (18) einen Zusatz aufweist und die Vorrichtung dafür verwendet wird, um Zusätze auf Heu aufzubringen, während das Heu mittels der Ballenpresse verpresst wird.

15. Die Vorrichtung gemäß Anspruch 10 **dadurch gekennzeichnet, dass** die Erntemaschine einen Mähdrescher ist.

16. Die Vorrichtung gemäß Anspruch 1, wobei die Wasserquelle (16, 16b) einen Wassertank (16) ist.

17. Die Vorrichtung gemäß Anspruch 1, wobei der Behälter (18) einen sprühbaren Futtermittelzusatz aufweist und die Vorrichtung dafür verwendet wird, um Futtermittelzusätze auf Getreide mit einer hohen Feuchte zu sprühen, wenn das Getreide mit der hohen Feuchte mittels einer Fördereinrichtung (90) transportiert wird und die Vorrichtung ferner ein Abdeckblech (94) aufweist, welches oberhalb der Fördereinrichtung (90) angeordnet ist, um den Wind abzuschotten, und die Sprühdüse (20) wenigstens teilweise innerhalb des Abdeckblechs (94) angeordnet ist.

18. Die Vorrichtung gemäß Anspruch 1 ferner mit einer Anzeigeeinheit (34), um Informationen, die sich auf die Vorrichtung beziehen, darzustellen.

19. Die Vorrichtung gemäß Anspruch 18 **dadurch gekennzeichnet, dass** die Anzeigeeinheit (24) Informationen wiedergibt, welche sich auf die Menge der landwirtschaftlichen Kulturpflanzen beziehen, welche mit dem Hilfsmittel besprüht wurden.

20. Ein Verfahren zum Behandeln von Silage, Heu, stark feuchtes Getreide oder andere landwirtschaftliche Kulturpflanzen, unter Verwendung einer Wasserquelle (16, 16b) und einer Leitung (30), welche sich zwischen der Wasserquelle (16, 16b) und einer Sprühdüse (20) befindet, bei welcher Wasser aus der Wasserquelle (16, 16b) bereitgestellt wird; unabhängig gesteuert und Zusätze von einem Behälter (18) in das Wasser in der Leitung (30) in einer Menge injiziert wird, welche sich auf die gewünschte Auftragungsmenge für den Zusatz bezieht, um eine Mischung aus Wasser und Zusatz in der Leitung herzustellen;
Pumpen der Mischung durch die Sprühdüse (20) auf die Kulturpflanzen, so dass die Silage, Heu, das stark feuchte Getreide oder andere landwirtschaftliche Kulturpflanzen mit den Zusätze behandelt werden;
wobei das Verfahren **dadurch gekennzeichnet ist, dass** ein handgroßer Behälter austauschbar befestigt ist, welcher einen konzentrierten Zusatz ein einer Menge beinhaltet, die signifikant kleiner ist als die Menge an Wasser, welche aus der Wasserquelle (16,16b) verfügbar ist.

21. Verfahren gemäß Anspruch 20 **dadurch gekennzeichnet, dass** der Zusatz in die Leitung (30) unter Verwendung einer Injektionspumpe (24) injiziert wird, welche zwischen dem Behälter (18) und der Leitung (30) angeschlossen ist.

22. Verfahren gemäß Anspruch 21 mit dem Schritt, die Injektionspumpe (24) rückwärts laufen zu lassen, um die Zusätze zurück in den Behälter (18) zu pumpen.

23. Verfahren gemäß Anspruch 20 mit den Schritten
- Bereitstellung einer Behälteraufnahme (28),
- Verbinden des Behälters (18) mit der Behälteraufnahme (28) und Bereitstellung einer Flüssigkeitsverbindung zwischen der Behälteraufnahme (28) und der Leitung (30).

24. Verfahren gemäß Anspruch 20 mit dem Schritt
- den Inhalt des Behälters (18) in Verbindung mit der Flüssigkeitsverbindung in der Art zu bringen, dass der Inhalt des Behälters (18) in die Leitung (30) injiziert werden kann.

25. Verfahren gemäß Anspruch 20, wobei die Silage, Heu und stark feuchtes Getreide oder andere landwirtschaftliche Kulturpflanzen mit Hilfsmitteln behandelt werden, während die Kulturpflanzen unter Verwendung von Erntemaschinen geerntet werden.

26. Verfahren gemäß Anspruch 20 mit dem Schritt der Darstellung von Informationen, die sich auf die Aufbringung der Futtermittelzusätze beziehen.

27. Verfahren gemäß Anspruch 20 mit dem Schritt der Darstellung von Informationen, die sich auf die Menge von landwirtschaftlichen Kulturpflanzen beziehen, die behandelt wurden.

28. Verfahren gemäß Anspruch 20 **dadurch gekennzeichnet, dass** das Verfahren, welches verwendet wird um Zusätze auf stark feuchtes Getreide zu sprühen, ferner mit den Schritten:
Transportieren des stark feuchten Getreides mit einer Transporteinrichtung (90);
Abschirmen von jeglichem Wind mittels einem Abdeckblech (92), welches über der Transporteinrichtung (90) angeordnet ist; und
Anordnung der Sprühdüse (20) in der Art, dass sie wenigstens teilweise innerhalb des Abdeckblechs (92) angeordnet ist, um Zusätze auf das stark feuchte Getreide zu sprühen, wenn es unter dem Abdeckblech (92) vorbei geführt wird.

29. Vorrichtung gemäß Anspruch 1 **dadurch gekennzeichnet, dass** die Flüssigkeit ein Futtermittel-Zusatzmittel ist.

30. Vorrichtung gemäß Anspruch 29 **dadurch gekennzeichnet, dass** der Futtermittel-Zusatz einen Impfstoff aufweist.

## Revendications

1. Dispositif (10) de pulvérisation d'un matériau sur des récoltes agricoles comprenant : une source d'eau (16, 16B) destinée à fournir une quantité relativement importante d'eau ; une buse de pulvérisation (20) ; une canalisation (30) raccordée entre la source d'eau (16, 16B) et la buse de pulvérisation (20) pour faire passer l'eau de la source d'eau (16, 16B) à la buse de pulvérisation (20) ; une première source de pression (22, 16B) de l'eau en communication avec la canalisation (30) pour amener l'eau de la source d'eau (16, 16B) à la buse de pulvérisation (20) ; et une pompe d'injection (24) contrôlable indépendamment de la source de pression d'eau (22, 16B) et en communication avec un récipient (18) pour injecter un matériau du récipient (18) dans la canalisation (30), ***caractérisé par*** un récipient (18) amovible, calibré pour une manipulation manuelle, contenant un matériau concentré présent en quantité significativement moindre que l'eau disponible dans la source d'eau, et qui est séparable de tout mécanisme de distribution, et un réceptacle (28) pour le récipient apte à recevoir de manière étanche et à mettre en place de manière amovible le récipient (18).

2. Dispositif selon la revendication 1, ***caractérisé en ce que*** la pompe d'injection (24) est située en amont d'une première pompe (22).

3. Dispositif selon la revendication 1, ***caractérisé par*** un contrôleur (32) pour contrôler le fonctionnement de la pompe d'injection (24), dans lequel le contrôleur (32) provoque l'injection du matériau à injecter selon un débit en relation avec un débit d'application désiré.

4. Dispositif selon la revendication 3, ***caractérisé par*** une interface utilisateur (72) permettant que le débit d'application désiré de l'additif soit entré dans le contrôleur (32) par un utilisateur.

5. Dispositif selon la revendication 1, ***caractérisé en ce que*** la pompe d'injection (24) se compose d'une pompe péristaltique.

6. Dispositif selon la revendication 1, ***caractérisé en ce que*** la pompe d'injection (24) se compose d'une pompe réversible.

7. Dispositif selon la revendication 1, comprenant de plus un réceptacle (28) à récipient pour porter le récipient (18), le réceptacle (28) à récipient comprenant de plus un orifice (66) qui est en communication avec la pompe d'injection (24).

8. Dispositif selon la revendication 7, ***caractérisé par*** une console (36) apte à recevoir et supporter le réceptacle (28) du récipient de manière à maintenir le récipient (18) soit dans une position debout, soit dans une position inversée.

9. Dispositif selon la revendication 7, comprenant de plus une console (36) pour assujettir le réceptacle (28) du récipient à une structure de support, ceci soit dans une position debout, soit dans une position inversée.

10. Dispositif selon la revendication 1, dans lequel le dispositif est utilisé sur un matériel de récolte.

11. Dispositif selon la revendication 10, ***caractérisé en ce que*** le matériel de récolte se compose d'une ramasseuse-hacheuse (10).

12. Dispositif selon la revendication 1, dans lequel le récipient (18) contient un additif pour fourrages et le dispositif est utilisé pour pulvériser des additifs pour fourrages sur l'ensilage tout en récoltant l'ensilage en utilisant la ramasseuse-hacheuse.

13. Dispositif selon la revendication 10, ***caractérisé en ce que*** le matériel de récolte (10) se compose d'une ramasseuse-presse.

14. Dispositif selon la revendication 3, dans lequel le récipient (18) contient un additif et le dispositif est utilisé pour pulvériser des additifs sur du foin tout en pressant le foin en balles en utilisant la ramasseuse-presse.

15. Dispositif selon la revendication 10, ***caractérisé en ce que*** le matériel de récolte se compose d'une moissonneuse-batteuse.

16. Dispositif selon la revendication 1, dans lequel la source d'eau (16, 16B) se compose d'une citerne (16) à eau.

17. Dispositif selon la revendication 1, dans lequel le récipient (18) comprend de l'additif pour la pulvérisation de fourrages et le dispositif est utilisé pour pulvériser des additifs pour fourrages sur des céréales à forte teneur en humidité pendant que les céréales à forte teneur en humidité sont déplacées par un dispositif transporteur (90), le dispositif comprenant de plus une enveloppe de protection (94) disposée au-dessus du dispositif transporteur (90) pour faire obstacle au vent, la buse de pulvérisation (20) étant disposée au moins partiellement à l'intérieur de l'enveloppe de protection (94).

18. Dispositif selon la revendication 1, comprenant de plus une unité d'affichage (34) pour afficher des informations concernant le dispositif.

19. Dispositif selon la revendication 18, ***caractérisé en ce que*** l'unité d'affichage (34) comporte des informations concernant la quantité de récolte qui a été pulvérisée avec les additifs.

20. Procédé de traitement d'ensilage, de foin, de céréales à forte teneur en humidité, ou d'autres récoltes agricoles utilisant une source (16, 16B) d'eau et une canalisation (30) entre la source (16, 16B) d'eau et une buse de pulvérisation (20) en amenant l'eau de la source (16, 16B) d'eau ; en contrôlant indépendamment et en injectant un additif d'un récipient (18) dans l'eau dans la canalisation (30) selon un débit en relation avec le débit d'application désiré de l'additif pour former un mélange d'eau et d'additif dans la canalisation ; en envoyant le mélange à travers la buse de pulvérisation (20) sur la récolte afin de traiter l'ensilage, le foin, les céréales à forte teneur en humidité ou les autres récoltes agricoles avec les additifs, le procédé étant ***caractérisé par*** le montage amovible d'un récipient (18) calibré pour une manipulation manuelle, d'additif concentré présent en quantité significativement moindre que l'eau disponible dans la source (16, 16B) d'eau.

21. Procédé selon la revendication 20, ***caractérisé en ce que*** l'additif est injecté dans la canalisation (30) en utilisant une pompe d'injection (24) montée entre le récipient (18) et la canalisation (30).

22. Procédé selon la revendication 21, ***caractérisé par*** l'étape d'inversion de la pompe d'injection (24) pour renvoyer les additifs dans le récipient (18).

23. Procédé selon la revendication 20, ***caractérisé par*** les étapes de fourniture d'un réceptacle (28) pour le récipient ; raccordement du récipient (18) au réceptacle (28) du récipient ; et fourniture d'un raccord fluidique entre le réceptacle (28) du récipient et la canalisation (30).

24. Procédé selon la revendication 20, ***caractérisé par*** les étapes de mise en communication du contenu du récipient (18) avec le raccord fluidique pour permettre au contenu du récipient (18) d'être injecté dans la canalisation (30).

25. Procédé selon la revendication 20, dans lequel l'ensilage, le foin, les céréales à forte teneur en humidité ou d'autres récoltes agricoles sont traités avec les additifs pendant la récolte en utilisant le matériel de récolte.

26. Procédé selon la revendication 20, ***caractérisé par*** les étapes d'affichage d'informations concernant l'application d'additifs pour fourrages.

27. Procédé selon la revendication 20, ***caractérisé par*** les étapes d'affichage d'informations concernant la quantité de récolte agricole qui a été traitée.

28. Procédé selon la revendication 20, ***caractérisé en ce que*** le procédé est utilisé pour pulvériser un additif sur des céréales à forte teneur en humidité, le procédé comprenant de plus les étapes consistant à : transporter les céréales à forte teneur en humidité avec un système transporteur (90) ; faire obstacle au vent avec une enveloppe de protection (92) disposée au-dessus du système transporteur (90) ; et placer la buse de pulvérisation (20) au moins partiellement dans l'enveloppe de protection (92) pour pulvériser les additifs sur les céréales à forte teneur en humidité lorsqu'elles passent sous l'enveloppe de protection (92).

29. Dispositif selon la revendication 1, ***caractérisé en ce que*** le liquide est un additif pour fourrages.

30. Dispositif selon la revendication 29, ***caractérisé en ce que*** l'additif pour fourrages se compose d'un inoculant.
